# EUROPÄISCHE PATENTANMELDUNG

(11) **EP 3 034 205 A2**
(43) Veröffentlichungstag der Anmeldung: **22.06.2016**
(21) Anmeldenummer: 15185848.7
(22) Anmeldetag: 18.09.2015
(51) Int. Cl.: B22F 3/105, B23K 26/03, B23K 26/08, B23K 26/342, B23K 26/042, G02B 7/02, G02B 7/28, G02B 7/36, G02B 13/00, G02B 26/12

(54) **VORRICHTUNG ZUR GENERATIVEN HERSTELLUNG EINES BAUTEILS**

(30) Priorität: 17.12.2014 DE 102014226243
(71) Anmelder: MTU Aero Engines AG, 80995 München (DE)
(72) Erfinder: Ladewig, Alexander, 83707 Bad Wiessee (DE); Schlothauer, Steffen, 85253 Erdweg (DE); Liebl, Christian, 85461 Bockhorn (DE); Schlick, Georg, 80809 München (DE); Fisser, Maximilian, 83684 Tegernsee (DE)

(57) **Zusammenfassung**

Die Erfindung betrifft eine Vorrichtung (10) zur generativen Herstellung eines Bauteils (12), umfassend mindestens einen Beschichter (14) zum Erzeugen einer Pulverschicht (16) auf einer Bauplattform (18), mindestens eine Strahlungsquelle (20), insbesondere einen Laser, zum Erzeugen eines Hochenergiestrahls (24), mittels welchem die Pulverschicht (16) in einer Baufläche (22) lokal zu einer Bauteilschicht (30) verschmelzbar und/oder versinterbar ist, mindestens eine Ablenkeinrichtung (26), mittels welcher der Hochenergiestrahl (24) auf unterschiedliche Bereiche der Pulverschicht (16) ablenkbar und auf die Baufläche (22) fokussierbar ist, mindestens ein Messsystem (28), mittels welchem eine Querschnittsgeometrie des Hochenergiestrahls (24) auf der Pulverschicht (16) und/oder der Bauteilschicht (30) ermittelbar ist, und mindestens eine Ausgleichseinrichtung (32). Die Ausgleichseinrichtung (32) ist dazu ausgebildet, anhand der Querschnittsgeometrie des Hochenergiestrahls (24) eine Fokusfläche (34) des Hochenergiestrahls (24) zu ermitteln, zu prüfen, ob eine Abweichung zwischen der Baufläche (22) und der Fokusfläche (34) des Hochenergiestrahls (24) vorliegt, und die Baufläche (22) und die Fokusfläche (34) in Abhängigkeit der Prüfung zueinander auszurichten. Die Erfindung betrifft weiterhin ein Verfahren zum Betreiben einer solchen Vorrichtung (10).

## Beschreibung

Die Erfindung betrifft eine Vorrichtung zur generativen Herstellung eines Bauteils sowie ein Verfahren zum Betreiben einer solchen Vorrichtung.

Vorrichtungen zur generativen Herstellung von Bauteilen wie beispielsweise Laserstrahlschmelzanlagen arbeiten mit einem fokussierten Hochenergie- bzw. Laserstrahl, der pulverförmiges Ausgangsmaterial, das als Schicht auf eine Bauplattform aufgebracht wurde, zu einer festen Bauteilschicht verschmilzt und/oder versintert. Von großer Bedeutung dabei ist die korrekte und gleichmäßige Fokussierung des Hochenergiestrahls über die gesamte Bauplattform. Durch den Fokus werden die Querschnittsgeometrie des Hochenergiestrahls und damit seine lokale Energiedichte beeinflusst, welche zu den Kerngrößen generativer Herstellungsverfahren gehören. Aus der GB 2490143 A ist es bekannt, im Strahlengang des Hochenergiestrahls einen Strahlenteiler anzuordnen, um die Querschnittsgeometrie des Hochenergiestrahls zu ermitteln. Mit Hilfe eines beweglichen Spiegels im Strahlengang kann dann die Querschnittsgeometrie verändert werden, um ein bestimmtes Belichtungsprofil mit einer gewünschten Energiedichteverteilung auf der Pulverschicht zu erzeugen.

Die Einstellung der exakten Fokuslage wird üblicherweise vor der Herstellung des betreffenden Bauteils einmalig mit einem relativ aufwändigen Verfahren vorgenommen. Es wurde jedoch beobachtet, dass derartige Vorrichtungen einem vermutlich thermisch oder mechanisch bedingten Drift ausgesetzt sind, der zu einer Undefinierten Verstellung der Fokuslage während des Herstellungsprozesses führen kann. Diese Verstellung der Fokuslage führt zu einem unpräzisen Belichtungsprofil und damit zu Prozessstörungen und Werkstofffehlern, woraus eine verschlechterte Bauteilqualität resultiert.

Aufgabe der vorliegenden Erfindung ist es, eine Vorrichtung und ein Verfahren zum generativen Herstellen eines Bauteils anzugeben, die die Einstellung einer exakten Fokussierung des Hochenergiestrahls über den gesamten Herstellungsprozess eines Bauteils ermöglichen.

Die Aufgabe wird erfindungsgemäß durch eine Vorrichtung gemäß Anspruch 1 zur generativen Herstellung eines Bauteils sowie durch ein Verfahren gemäß Anspruch 9 zum Betreiben einer solchen Vorrichtung gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft eine Vorrichtung zur generativen Herstellung eines Bauteils. Die Einstellbarkeit einer exakten Fokussierung des Hochenergiestrahls über den gesamten Herstellungsprozess des Bauteils ist erfindungsgemäß durch ermöglicht, dass die Vorrichtung mindestens einen Beschichter zum Erzeugen einer Pulverschicht auf einer Bauplattform, mindestens eine Strahlungsquelle, insbesondere einen Laser, zum Erzeugen eines Hochenergiestrahls, mittels welchem die Pulverschicht in einer Baufläche lokal zu einer Bauteilschicht verschmelzbar und/oder versinterbar ist, mindestens eine Ablenkeinrichtung, mittels welcher der Hochenergiestrahl auf unterschiedliche Bereiche der Pulverschicht ablenkbar und auf die Baufläche fokussierbar ist, mindestens ein Messsystem, mittels welchem eine Querschnittsgeometrie des Hochenergiestrahls auf der Pulverschicht und/oder der Bauteilschicht ermittelbar ist, und mindestens eine Ausgleichseinrichtung umfasst. Die Ausgleichseinrichtung ist dabei dazu ausgebildet, anhand der Querschnittsgeometrie des Hochenergiestrahls eine Fokusfläche des Hochenergiestrahls zu ermitteln, zu prüfen, ob eine Abweichung zwischen der Baufläche und der Fokusfläche des Hochenergiestrahls vorliegt, und die Baufläche und die Fokusfläche in Abhängigkeit der Prüfung zueinander auszurichten. Mit anderen Worten ist es also erfindungsgemäß vorgesehen, dass die Vorrichtung dazu ausgelegt ist, eine relative Verschiebung der Fokusfläche entlang der Z-Achse der Bauplattform und/oder ein Verkippen zwischen der Fokusfläche des Hochenergiestrahls und der Baufläche der Pulver- bzw. Bauteilschicht auch während des Herstellungsprozesses des Bauteils zu ermitteln und die Fokus- und Baufläche im Fall einer unzulässigen Abweichung wieder korrekt zueinander auszurichten. Hierdurch kann eine gleich bleibend hohe Bauteilqualität sichergestellt werden, da etwaige Drift zwischen der Fokusfläche und der Bauteilfläche mit Hilfe der erfindungsgemäßen Vorrichtung auch während des Baujobs im Sinne einer Onlineüberwachung detektiert und ausgeglichen werden können. Dazu ist es von Vorteil, dass das Messsystem die tatsächliche Querschnittsgeometrie des Hochenergiestrahls auf der Pulver- und/oder Bauteilschicht ermitteln kann, da indirekte Messsysteme, die lediglich die Querschnittsgeometrie im Strahlengang der Vorrichtung selbst, aber nicht die Querschnittsgeometrie auf der Pulver- bzw. Bauteiloberfläche messen, eine nachfolgende Störung, die zu einem Verschieben oder Verkippen der Fokusfläche gegenüber der Baufläche führt, nicht detektieren können. Das im Rahmen der Erfindung verwendete Messsystem ist vorzugsweise auf die Eigenschaften des zu messenden Hochenergiestrahls angepasst und registriert beispielsweise die Wellenlänge eines Bearbeitungslasers (z. B. 1064 nm), um den Laserspot möglichst präzise abbilden und dessen Querschnittsgeometrie ermitteln zu können. In einfachster Ausgestaltung sind die Fokusfläche und die Baufläche jeweils Ebenen, die mit Hilfe der erfindungsgemäßen Vorrichtung parallel bzw. deckungsgleich angeordnet bzw. gehalten werden. Alternativ oder zusätzlich kann aber auch vorgesehen sein, dass die Fokus- und/oder die Baufläche uneben sind, wodurch der Fokus des Hochenergiestrahls beispielsweise optimal an ein jeweiliges Bogenmaß einer herzustellenden, gewölbten Bauteilschicht anpassbar ist. Die erfindungsgemäße Vorrichtung kann grundsätzlich nicht nur zum Herstellen, sondern auch zum Reparieren eines Bauteils, das heißt zum generativen Wiederherstellen eines Bauteilbereichs verwendet werden.

In einer vorteilhaften Ausgestaltung der Erfindung ist vorgesehen, dass die Ablenkeinrichtung wenigstens eine optische Linse, insbesondere ein F-Theta Objektiv umfasst, deren relative Lage gegenüber der Strahlungsquelle in Abhängigkeit der Prüfung durch wenigstens ein zugeordnetes Stellmittel einstellbar ist. Dies erlaubt eine besonders einfache Gewährleistung einer planaren Fokusfläche sowie einer einfachen Ausrichtung von Fokus- und Baufläche zueinander, indem die Neigung und/oder der Abstand der wenigstens einen optischen Linse zur Strahlungsquelle über das oder die zugeordneten Stellmittel beim Auftreten einer unzulässigen Abweichung entsprechend korrigiert wird. Beispielsweise kann die wenigstens eine optische Linse als an sich bekanntes F-Theta Objektiv ausgebildet und beweglich gelagert sein. Mit Hilfe von ein, zwei oder drei Stellmitteln, die beispielsweise als Aktuatoren ausgebildet sein und unabhängig von einander gesteuert werden können, kann dann die räumliche Lage des F-Theta Objektivs in Abhängigkeit der ermittelten Fehlstellung zwischen Fokusfläche und Baufläche eingestellt werden, um beide Flächen wieder korrekt zueinander auszurichten.

Weitere Vorteile ergeben sich, indem der wenigstens einen optischen Linse eine Kinematik, insbesondere eine Parallelkinematik zugeordnet ist, mittels welcher die wenigstens eine optische Linse in mindestens drei translatorischen und/oder rotatorischen Freiheitsgraden bewegbar ist. Dies ermöglicht die Einstellung der wenigstens einen optischen Linse mit hoher Dynamik und hohen Beschleunigungen und Endgeschwindigkeiten, wodurch eine entsprechend schnellere Herstellung bzw. Nachjustierung von Fokus- und Baufläche gewährleistet werden kann. Zudem ist die Positioniergenauigkeit der optischen Linse bei einer Parallelkinematik grundsätzlich besser, da sich Positionsfehler der Achsen nicht, wie bei einer seriellen Kinematik, aufsummieren sondern nur anteilig in die Gesamtbewegung eingehen. Auch hierdurch wird eine besonders hohe Bauteilqualität sichergestellt.

Weitere Vorteile ergeben sich, wenn die Ausgleichseinrichtung ausgebildet ist, in Abhängigkeit der Prüfung eine Ansteuerung der Strahlungsquelle und/oder der Ablenkeinrichtung anzupassen. Hierdurch wird auf konstruktiv einfache Weise sichergestellt, dass Änderungen, die sich durch die Neuausrichtung von Fokus- und Baufläche zueinander ergeben, bei der Ansteuerung der Strahlungsquelle und/oder der Ablenkeinrichtung entsprechend berücksichtigt werden können. Dies erlaubt eine zuverlässige Korrektur der ursprünglichen Maschinenkoordinaten, die ansonsten durch die Neukalibrierung der Fokusfläche fehlerhaft werden könnten, und trägt zur Sicherstellung einer besonders hohen Bauteilqualität bei. Darüber hinaus kann die Vorrichtung auf diese Weise vorteilhaft ohne F-Theta Optik ausgebildet und stattdessen mit einem dynamischen Fokussiersystem versehen sein.

In einer weiteren vorteilhaften Ausgestaltung der Erfindung ist vorgesehen, dass das Messsystem in einen Strahlengang des Hochenergiestrahls integriert ist und/oder ausgebildet ist, die Querschnittsgeometrie des Hochenergiestrahls kollinear zum Hochenergiestrahl zu ermitteln. Durch Integration eines Messsystems in den Strahlengang des Hochenergiestrahls ist es möglich, ein sehr hochauflösendes Bild des Hochenergiestrahls (Laserspots) zu erzeugen, wobei der von der Pulver- bzw. Bauteilschicht rückgestrahlte Hochenergiestrahl als Grundlage für die Ermittlung der Querschnittsgeometrie herangezogen wird. Die Integration kann dabei grundsätzlich modular zum einmaligen Einstellen und zum routinemäßigen Prüfen vorgenommen werden. Alternativ oder zusätzlich kann das Messsystem auch für eine Prüfung vor jedem Baujob und/oder während eines Baujobs in den Strahlengang integriert werden oder dauerhaft im Strahlengang integriert sein. Hierdurch wird vorteilhaft sichergestellt, dass das Messsystem, da es in den Strahlengang integriert ist, die Querschnittsgeometrie automatisch an der richtigen Position misst.

Weitere Vorteile ergeben sich, indem die Ausgleichseinrichtung ausgebildet ist, in Abhängigkeit der Prüfung eine relative Lage der Bauplattform zur Strahlungsquelle einzustellen. Mit anderen Worten ist es erfindungsgemäß vorgesehen, dass alternativ oder zusätzlich zu einer Anpassung im optischen System der Vorrichtung eine Anpassung der räumlichen Lage der Bauplattform vorgenommen werden kann, um die Fokus- und die Baufläche korrekt zueinander auszurichten. In einer weiteren vorteilhaften Ausgestaltung der Erfindung ist vorgesehen, dass die Ausgleichseinrichtung ausgebildet ist, die Fokusfläche anhand eines Vergleichs zwischen wenigstens einer ermittelten Querschnittsgeometrie des Hochenergiestrahls und wenigstens einer vorgegebenen Querschnittsgeometrie und/oder anhand der Querschnittsgeometrien des Hochenergiestrahls in wenigstens drei nicht kollinearen Messpunkten und/oder anhand wenigstens einer minimalen Querschnittsgeometrie des Hochenergiestrahls in einem Messpunkt zu ermitteln. Mit anderen Worten ist es vorgesehen, dass anhand der Querschnittsgeometrie des Hochenergiestrahls festgestellt wird, ob sich der Hochenergiestrahl im Fokus befindet, indem ein Vergleich zwischen der ermittelten Querschnittsgeometrie und einer vorbestimmten Querschnittsgeometrie vorgenommen wird. Hieraus kann dann die Fokusfläche bestimmt werden. Alternativ oder zusätzlich kann eine Messung der Querschnittsgeometrie in wenigstens drei nicht kollinearen und vorzugsweise möglichst weit voneinander beabstandeten Messpunkten vorgenommen werden, um die Fokusfläche zu ermitteln. In einfachster Ausgestaltung, das heißt im Fall einer Fokusebene, sind drei Messpunkte ausreichend. Ebenso kann vorgesehen sein, dass eine minimale Querschnittsgeometrie des Hochenergiestrahls in wenigstens einem Messpunkt ermittelt wird, um die Raumkoordinaten des zugeordneten Fokuspunktes zu bestimmen. Dies kann beispielsweise durch ein Verfahren und/oder Verkippen der Bauplattformebene und Aufzeichnen der resultierenden Querschnittsgeometrie des Hochenergiestrahls erfolgen. Wenn das Minimum der Querschnittsgeometrie erreicht wird, befindet sich der Hochenergiestrahl im Fokus.

Weitere Vorteile ergeben sich, indem der Ausgleichseinrichtung eine Messeinrichtung, insbesondere ein Glasmaßstab und/oder ein generativ mit dem Bauteil gefertigter Prüfstab, zugeordnet ist, mittels welcher ein Abstand zwischen der Strahlungsquelle und der Pulverschicht ermittelbar ist. Dies stellt eine konstruktiv einfache Möglichkeit dar, um neben den X/Y-Koordinaten des Hochenergiestrahls auf der Pulver- bzw. Bauteilschicht auch die Z-Koordinate zu ermitteln. Ein Glasmaßstab ist ein sehr fein geteiltes Lineal aus geschliffenem Glas, manchmal auch aus glasähnlichem Kunststoff. Der Vorteil von Glas und Glaskeramik ist die sehr geringe Wärmedehnung, sodass Temperaturschwankungen auf die Maßhaltigkeit kaum einen Einfluss haben. Alternativ oder zusätzlich kann ein Prüfstab generativ mit dem Bauteil mitgebaut und zur Ermittlung der Z-Koordinate verwendet werden.

Ein zweiter Aspekt der Erfindung betrifft ein Verfahren zum Betreiben einer Vorrichtung nach einem der vorhergehenden Ausführungsbeispiele. Die Einstellung einer exakten Fokussierung des Hochenergiestrahls über den gesamten Herstellungsprozess eines Bauteils wird dabei erfindungsgemäß dadurch ermöglicht, dass das Verfahren zumindest die Schritte Ermitteln wenigstens einer Querschnittsgeometrie des Hochenergiestrahls auf der Pulverschicht und/oder der Bauteilschicht mittels des Messsystems, Ermitteln der Fokusfläche des Hochenergiestrahls anhand der wenigstens einen Querschnittsgeometrie des Hochenergiestrahls mittels der Ausgleichseinrichtung, Prüfen mittels der Ausgleichseinrichtung, ob eine Abweichung zwischen der Baufläche und einer Fokusfläche des Hochenergiestrahls vorliegt, und Ausrichten der Baufläche und der Fokusfläche zueinander in Abhängigkeit der Prüfung umfasst. Mit anderen Worten wird zur Vermeidung von unzulässigen Abweichungen der Fokus- und der Baufläche und damit zu Vermeidung von Prozessstörungen und Qualitätsmängeln die Fokusfläche des Hochenergiestrahls mindestens einmal ermittelt und bei Bedarf wieder relativ zur Baufläche ausgerichtet, was sowohl offline als auch online bzw. während des Baujobs erfolgen. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass eine Leistung des Hochenergiestrahls beim Ermitteln der Querschnittsgeometrie derart eingestellt wird, dass die Pulverschicht im Messpunkt nicht verschmilzt und/oder versintert. Hierdurch wird zuverlässig sichergestellt, dass die Ermittlung der Fokusfläche ohne Eingriff in den eigentlichen Herstellungsprozess und ohne Beschädigung bereits hergestellter Bauteilschichten erfolgt.

In einer weiteren vorteilhaften Ausgestaltung der Erfindung ist vorgesehen, dass die Fokusfläche des Hochenergiestrahls anhand der Querschnittsgeometrien des Hochenergiestrahls in wenigstens drei nicht kollinearen Messpunkten ermittelt wird. Dies stellt eine besonders schnelle und einfache Möglichkeit zur Ermittlung der Fokusfläche dar. Im einfachsten Fall einer Fokusebene sind drei Messpunkte ausreichend, um die Fokusebene korrekt definieren zu können. Im Fall geometrisch komplexerer Fokusflächen können vier oder mehr Messpunkte für eine eindeutige Bestimmung erforderlich sein. Vorzugsweise werden die mindestens drei Messpunkte derart gewählt, dass sie möglichst weit voneinander beabstandet angeordnet sind, da hierdurch eine besonders präzise Bestimmung der Fokusfläche sichergestellt wird.

In einer weiteren vorteilhaften Ausgestaltung der Erfindung ist vorgesehen, dass die Bauplattform zum Ermitteln einer minimalen Querschnittsgeometrie des Hochenergiestrahls relativ zur Strahlungsquelle bewegt wird. Obwohl die Ermittlung der Fokuslage in einem Messpunkt grundsätzlich auch durch einen Vergleich zwischen der ermittelten Querschnittsgeometrie und einer vorbestimmten Querschnittsgeometrie erfolgen kann, bietet die Ermittlung der optimalen Fokuslage unter Verfahren der Bauplattform den besonderen Vorteil, dass die minimale Querschnittsgeometrie direkt am jeweiligen Bauteil bzw. Pulverbett ermittelt wird, so dass individuell auftretende thermische oder mechanische Abweichungen besser berücksichtig werden können. Beim Verfahren der Bauplattform wird die resultierende Querschnittsgeometrie des Hochenergiestrahls ermittelt. Wenn die minimale Querschnittsgeometrie erreicht wird, befindet sich der Hochenergiestrahl an diesem Messpunkt im Fokus. Der derart ermittelte Messpunkt kann dann zur weiteren Ermittlung der Fokusfläche herangezogen werden.

Weitere Vorteile ergeben sich, indem die Bauplattform zum Ermitteln der minimalen Querschnittsgeometrie kontinuierlich und/oder zumindest um die Rayleighlänge des Hochenergiestrahls und/oder um mindestens 20 mm und/oder schrittweise um eine vorgegebene Strecke, insbesondere um 10 % der Rayleighlänge des Hochenergiestrahls bewegt wird. Hierdurch wird sichergestellt, dass es sich bei der minimalen Querschnittsgeometrie des Hochenergiestrahls um ein globales Minimum handelt.

In einer weiteren vorteilhaften Ausgestaltung der Erfindung ist vorgesehen, dass zumindest das Prüfen, ob eine Abweichung zwischen der Baufläche und der Fokusfläche des Hochenergiestrahls vorliegt, kontinuierlich und/oder in vorgegebenen Zeitintervallen und/oder nach jeder hergestellten Bauteilschicht und/oder vor einer vorbestimmten Bauteilschicht und/oder in Abhängigkeit einer Erwärmung der Vorrichtung durchgeführt wird. Auf diese Weise kann das erfindungsgemäße Verfahren bedarfsweise durchgeführt und optimal an den jeweiligen Baujob angepasst werden, wodurch neben einer hohen Präzision und Bauteilqualität auch minimale zeitliche Verzögerungen durch die Überprüfung und die gegebenenfalls notwendige Korrektur der Ausrichtung von Fokusfläche und Baufläche zueinander sichergestellt werden.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
Fig. 1 eine schematische Schnittansicht eines Ausführungsbeispiels einer erfindungsgemäßen Vorrichtung zum generativen Herstellen eines Bauteils;
Fig. 2 eine schematische Aufsicht einer Bauteilschicht, die mit 15 parallel zu einer Laserbelichtungsrichtung ausgerichteten Einzelvektoren belichtet wurde;
Fig. 3 eine schematische Aufsicht der Bauteilschicht, die mit 15 senkrecht zur Laserbelichtungsrichtung ausgerichteten Einzelvektoren belichtet wurde; und
Fig. 4 eine Prinzipdarstellung der resultierenden Spurbreiten der Einzelvektoren.

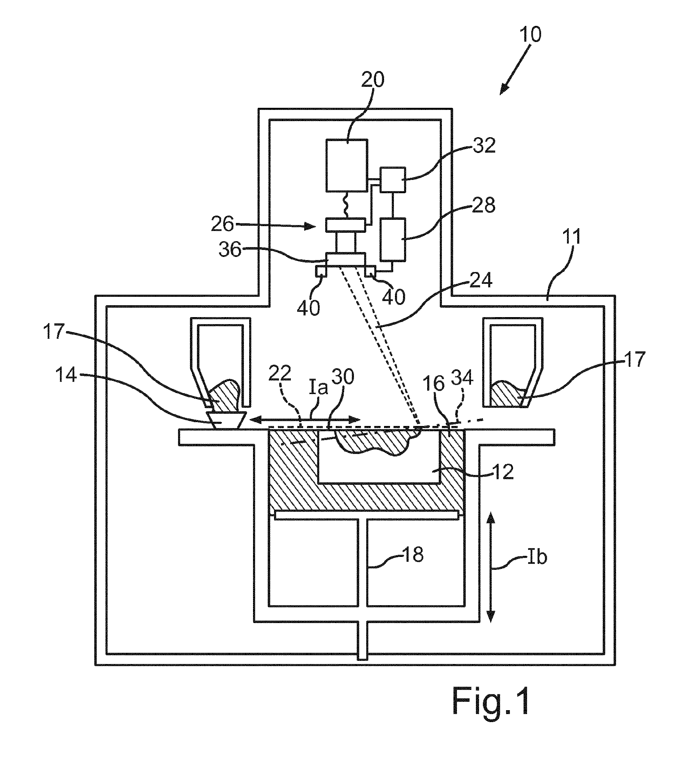

Fig. 1 zeigt eine schematische Schnittansicht eines Ausführungsbeispiels einer erfindungsgemäßen Vorrichtung 10 zum generativen Herstellen oder Reparieren eines Bauteils 12, welches vorliegend als Laufschaufel einer Turbine eines Flugtriebwerks ausgebildet ist. Die Vorrichtung 10 umfasst eine Prozesskammer 11, in welcher ein gemäß Doppelpfeil Ia bewegbarer Beschichter 14 zum Erzeugen einer Pulverschicht 16 aus einem Bauteilwerkstoff 17 auf einer Bauplattform 18 angeordnet ist. Die Bauplattform 18 ist ihrerseits gemäß Doppelpfeil Ib bewegbar und kann darüber hinaus optional verdrehbar und/oder verschwenkbar ausgebildet sein. Beim Rüsten der Vorrichtung 10 kann die Bauplattform 18 zum Beschichter 14 durch Drehung um die X- und Y-Achse ausgerichtet werden, damit ein gleichmäßiger Auftrag der Pulverschicht 16 über die Bauplattform 18 gewährleistet werden kann. Dies kann notwendig sein, da die Oberseite und die Unterseite der Bauplattform 18 häufig nicht exakt parallel zueinander sind. Weiterhin ist eine vorliegend als Laser ausgebildete Strahlungsquelle 20 vorgesehen, mittels welcher im Bereich einer vorliegend ebenen und entlang der X/Y-Achse der Vorrichtung 10 verlaufenden Baufläche 22 der Bauplattform 18 ein Hochenergie- bzw. Laserstrahl 24 für ein schichtweises und lokales Verschmelzen und/oder Versintern des Bauteilwerkstoffs 17 erzeugt wird.

Der Hochenergiestrahl 24 kann mittels einer Ablenkeinrichtung 26 auf unterschiedliche Bereiche der Pulverschicht 16 abgelenkt und auf die Baufläche 22 fokussiert werden. Weiterhin umfasst die Vorrichtung 10 mindestens ein Messsystem 28, mittels welchem eine Querschnittsgeometrie des Hochenergiestrahls 24 auf der Pulverschicht 16 und/oder einer bereits hergestellten Bauteilschicht 30 ermittelbar ist. Das Messsystem 28 ist vorzugsweise in den Strahlengang des Hochenergiestrahls 24 integriert oder zumindest integrierbar, um die Querschnittsgeometrie auf der Pulverschicht 16 hochaufgelöst zu erfassen.

Um die Einstellung einer exakten Fokussierung des Hochenergiestrahls 24 über den gesamten Herstellungsprozess des Bauteils 12 sicherstellen zu können, umfasst die erfindungsgemäße Vorrichtung 10 darüber hinaus eine Ausgleichseinrichtung 32, welche ausgebildet ist, anhand der Querschnittsgeometrie des Hochenergiestrahls 24 eine vorliegend ebenfalls ebene Fokusfläche 34 des Hochenergiestrahls 24 zu ermitteln, zu prüfen, ob eine unzulässige Abweichung zwischen der Baufläche 22 und der Fokusfläche 34 des Hochenergiestrahls 24 vorliegt, und die Baufläche 22 und die Fokusfläche 34 in Abhängigkeit der Prüfung bedarfsweise wieder korrekt zueinander auszurichten. Die Ausrichtung erfolgt bevorzugt mittels der Ablenkeinrichtung 26, von der grundsätzlich mindestens zwei unterschiedliche Ausführungsformen vorgesehen sein können. Alternativ oder zusätzlich kann die relative Ausrichtung von Baufläche 22 und Fokusfläche 34 aber auch durch relatives Bewegen der Bauplattform 18 zur Strahlungsquelle 20 erfolgen.

Im vorliegend gezeigten Fall umfasst die Ablenkeinrichtung 26 ein sogenanntes F-Theta-Objektiv 36, um eine planare Fokusfläche 34 zu realisieren. Dieser Typ der Ablenkeinrichtung 26 wird im Folgenden als "Maschinentyp 1" bezeichnet werden. Diese Fokusfläche 34 wird bislang einmalig oder nach dem Austausch der Optik aufwändig eingestellt. Aus heute noch ungeklärten Gründen kommt es dazu, dass sich diese Fokusfläche 34 gegenüber der Baufläche 22 mit der Zeit verkippt und/oder verschiebt. Daraus können Prozessstörungen und in Folge dessen Werkstofffehler im Bauteil 12 entstehen, da keine korrekte Fokussierung mehr möglich ist. Anstelle eines F-Theta-Objektivs 36 kann auch ein dynamisches Fokussiersystem (nicht gezeigt) vorgesehen sein. Dieser alternative Typ der Ablenkeinrichtung 26 wird im Folgenden als "Maschinentyp 2" bezeichnet werden. Beim Maschinentyp 2 kann vorteilhaft auf die Planfeldoptik des Maschinentyps 1 verzichtet werden. Stattdessen wird die Fokusfläche 34 durch dynamische Fokussierung synchron mit der Auftreffposition des Hochenergiestrahls 24 auf der Pulverschicht 16 bzw. Baufläche 22 eingestellt. Auch diese Fokussiersysteme werden in der Regel einmalig in einem aufwendigen Prozess kalibriert, sind danach aber ebenfalls einem Drift ausgesetzt, welcher zu einer undefinierten Verstellung der Fokusfläche 34 führen kann.

Mit Hilfe der erfindungsgemäßen Vorrichtung 10 können Abweichungen der Fokusfläche 34 und damit verbundene Prozessstörungen vermieden werden, indem die korrekte Lage der Fokusfläche 34 überwacht und gegebenenfalls nachgestellt bzw. nachgeregelt wird. Diese Steuerung oder Regelung kann grundsätzlich jederzeit, also sogar online während des Baujobs durchgeführt werden. Dazu wird wie bereits erwähnt zunächst die Fokusfläche 34 mit Hilfe der auf der Pulverschicht 16 bzw. der Bauteilschicht 30 gemessenen Querschnittsgeometrie des Hochenergiestrahls 24 ermittelt. Anschließend wird auf Abweichungen zwischen der Baufläche 22 und der Fokusfläche 34 geprüft. Wenn die Abweichung der Fokusfläche 34 zur Baufläche 22 als unzulässig eingestuft wird, steuert die Ausgleichseinrichtung 32 im Fall des Maschinentyps 1 zwei und vorzugsweise drei Stellmittel 40 an, mittels welchen das das beweglich gelagerte F-Theta-Objektiv 36 in mindestens drei translatorischen und/oder rotatorischen Freiheitsgraden bewegbar ist. Hierdurch können die Baufläche 22 und die Fokusfläche 34 wieder koplanar ausgerichtet werden. Alternativ kann eine Parallelkinematik vorgesehen sein, über welche das F-Theta-Objektiv 36 in sechs Freiheitsgraden beweglich ist.

Im Fall des Maschinentyps 2 ermittelt die Ausgleichseinrichtung 32 vorzugsweise durch Interpolation eine Ausgleichsfunktion für das dynamische Fokussiersystem der Ablenkeinrichtung 26. Diese Ausgleichsfunktion kann dann auf die regulären Ansteuerungsdaten der Strahlungsquelle 20 und/oder der Ablenkeinrichtung 26 angewendet werden, um eine automatische Fokuskorrektur durchzuführen.

Durch Integration des Messsystems 28 in den Strahlengang des Lasers 24 ist es möglich, ein sehr hochauflösendes Bild des Laserspots zu erzeugen. Das Messsystem 28 soll dazu auf die Wellenlänge des Bearbeitungslasers (z. B. 1064 nm) angepasst sein, um den Laserspot optimal abbilden zu können. Anhand der Größe und Form des Laserspots wird festgestellt, ob sich der Laser 24 im Fokus befindet. Dies kann beispielsweise durch Vergleich mit einem vorgegebenen Querschnittsflächenwert geschehen, der zuvor einmalig definiert wurde. Alternativ kann die minimale Querschnittsfläche durch Verfahren der Bauplattform 18 und kontinuierliches Aufzeichnen der Laserspotgeometrie ermittelt werden. Wenn die Querschnittsfläche ein Minimum erreicht, befindet sich der Laser 24 im Fokus. Um die Fokusfläche 34 in Übereinstimmung mit der Baufläche 22 zu bringen, können folgende Schritte durchgeführt werden.

Zunächst wird die Bauplattform 18 wie bereits beschrieben zum Beschichter 14 ausgerichtet, um einen gleichmäßigen Pulverauftrag zu gewährleisten. Anschließend wird die Fokusfläche 34 der Laseroptik anhand von mindestens 3 Messpunkten ermittelt. Hierbei wird die Strahlungsquelle 20 vorzugsweise mit geringer Leistung betrieben, um ein ungewolltes Aufschmelzen oder Versintern des Werkstoffs zu verhindern. Das Messsystem 28 misst, wenn es in den Strahlengang integriert ist, automatisch an der richtigen Position den Laserspotdurchmesser bzw. dessen Querschnittsgeometrie auf der Baufläche 22. Alternativ wird das Messsystem 28 aktiv auf den jeweiligen Messpunkt ausgerichtet. Anschließend wird die Bauplattform 18 um einen bestimmten Weg in Z-Richtung (Doppelpfeil Ib) kontinuierlich oder in kleinen Schritten um eine bestimmte Strecke verfahren. Die Strecke entspricht dabei vorzugsweise mindestens der Rayleighlänge des Hochenergiestrahls 24 und liegt damit im Fall eines Lasers im Bereich zwischen etwa 20 mm und etwa 60 mm, insbesondere zwischen 30 mm und 50 mm. Im Fall einer schrittweisen Bewegung entspricht die Schrittweite vorzugsweise etwa 10 % der Rayleighlänge. In einer Ausgestaltung der Erfindung werden während der Bewegung der Bauplattform 18 kontinuierlich die Querschnittsgeometrie des Laserspots (X,Y-Messwerte) und die beispielsweise von einem Glasmaßstab (Messeinrichtung der Z-Achse) erfassten Z-Messwerte ermittelt. Sobald sich der Laserstrahl 24 im Fokus befindet, werden die entsprechenden (X,Y,Z)-Koordinaten des zugeordneten Messpunkts gespeichert. Dieser Vorgang wird an mindestens 3 Messpunkten durchgeführt, die nicht kollinear angeordnet und möglichst weit voneinander beabstandet sind. Aus den daraus gewonnen Koordinatentupeln ermittelt die Ausgleichseinrichtung 32 eine Ebenengleichung, die die optimale Fokusfläche 34 charakterisiert. Im Fall von Maschinentyp 1 wird nun über die Stellmittel 40 das F-Theta-Objektiv 36 bewegt bzw. verkippt, um die Fokusfläche 34 wieder deckungsgleich mit der Baufläche 22 anzuordnen. Gegebenenfalls kann dieser Vorgang iterativ wiederholt werden, bis die geforderte Genauigkeit erreicht ist. Ebenso kann eine Korrektur der Maschinenkoordinaten vorgesehen sein, da die Linsenposition des F-Theta-Objektivs 36 Einfluss auf die kalibrierten Maschinenkoordinaten hat. Im Fall von Maschinentyp 2 ermittelt die Ausgleichseinrichtung 32 aus den ermittelten Koordinatentupeln eine Ausgleichsfunktion, die auf die Ansteuer- bzw. Baudaten des optischen Systems der Vorrichtung 10 angewendet wird, um für jeden Punkt der Baufläche 22 die korrekte Ansteuerung des dynamischen Fokussiersystems wieder herzustellen. Grundsätzlich kann die erfindungsgemäße Vorrichtung 10 sowohl zum reinen Monitoring, das heißt zur Kontrolle, ob die Fokusfläche 34 korrekt angeordnet ist, als auch zur Steuerung bzw. Regelung der Ausrichtung der Fokusfläche 34 ausgebildet sein bzw. verwendet werden.

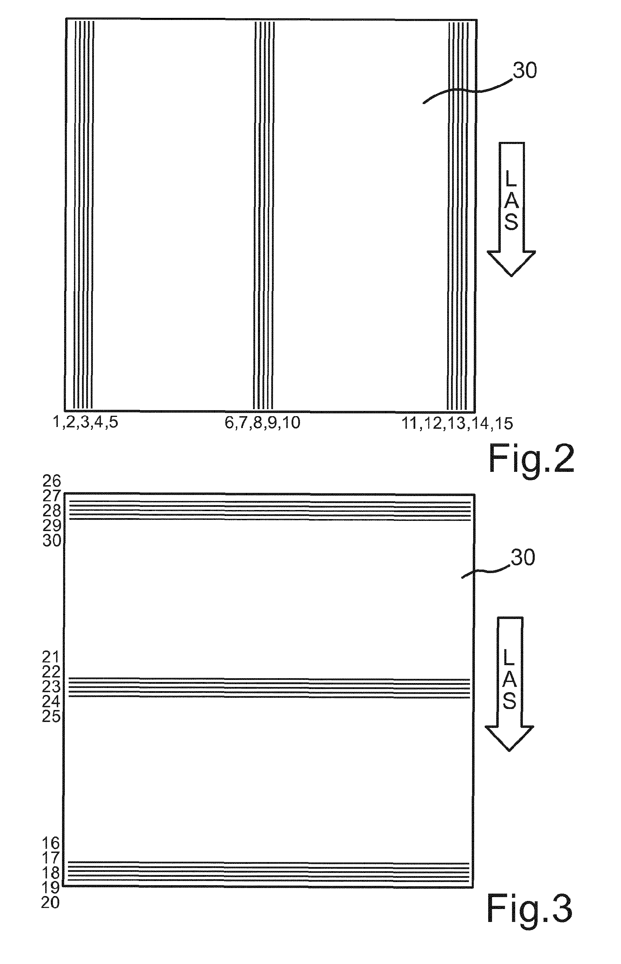

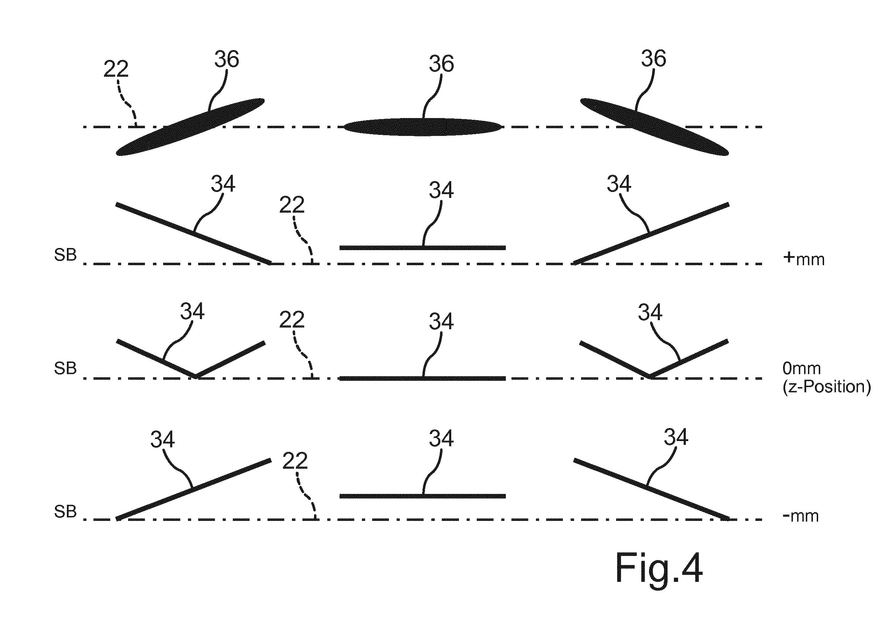

Zur näheren Erläuterung der Problematik abweichender Fokusflächen 34 zeigen Fig. 2 und Fig. 3 eine schematische Aufsicht einer Bauteilschicht 30, die jeweils mit 15 parallel und gegen die Strömung (Fig. 2) bzw. senkrecht (Fig. 3) zu einer mit LAS bezeichneten Laserbelichtungsrichtung ausgerichteten Einzelvektoren belichtet wurde. Fig. 4 zeigt eine Prinzipdarstellung der daraus resultierenden Spurbreiten der Einzelvektoren. Die Einzelvektoren wurden jeweils in Fünfergruppen gebündelt und an einer bestimmten Position der Baufläche 22 belichtet. Dabei wurde die z-Position der Bauplattform 18 gemäß dem in Fig. 1 gezeigten Doppelpfeil Ib verändert. Die Positionen der Bauplattform 18 bezogen auf die ideale, das heißt im Fokus liegende z-Position 0 waren: -2 cm, -1 cm, 0, +1 cm und +2 cm. Es ist zu betonen, dass diese Schrittanzahl und Schrittweite lediglich beispielhaft ist. Dementsprechend wurden die Einzelvektoren 1,6, 11, 16, 21, 26 bei der z-Position -2 cm belichtet, die Einzelvektoren 2, 7, 12, 17, 22, 27 wurden bei der z-Position -1 cm belichtet, die Einzelvektoren 3, 8, 13, 18, 23, 28 wurden bei der z-Position 0 cm belichtet, die Einzelvektoren 4, 9, 14, 19, 24, 29 wurden bei der z-Position +1 cm belichtet und die Einzelvektoren 5, 10, 15, 20, 25, 30 wurden bei der z-Position +2 cm belichtet. Anschließend wurde die Spurbreite jedes Einzelvektors an drei Messpunkten gemessen. Bei den in Fig. 2 gezeigten Einzelvektoren parallel zur Strömung wurde am oberen Rand, in der Mitte und am unteren Rand gemessen. Bei den in Fig. 3 gezeigten Einzelvektoren senkrecht zur Strömung wurde am linken Rand, in der Mitte und am rechten Rand gemessen.

Die Auswirkungen der Fehlstellung des F-Theta-Objektivs 36 zur Baufläche 22 auf die resultierenden Spurbreiten (SB) der Einzelvektoren sind in Fig. 4 dargestellt. Eine Spuraufweitung aufgrund von aufschwimmenden Oxiden oder dergleichen wurde nicht beobachtet. Man erkennt, dass die Fokusfläche 34 nur im Fall der mittigen Belichtung in z=0 Lage koplanar mit der Belichtungsfläche 22 und somit korrekt ausgerichtet ist. In allen anderen Fällen ergeben sich Abweichungen zwischen der Fokusfläche 34 und der Belichtungsfläche 22, was ohne Korrektur und Ausrichtung der Fokusfläche 34 und der Belichtungsfläche 22 zueinander zu Verzerrungen des Laserspots und damit zu ungleichmäßigem und unpräzisem Energieeintrag in die Pulverschicht 14 mit entsprechender Fehlstellenbildung im späteren Bauteil 12 führen würde.

### Bezugszeichenliste:

- 10: Vorrichtung
- 11: Prozesskammer
- 12: Bauteil
- 14: Beschichter
- 16: Pulverschicht
- 17: Bauteilwerkstoff
- 18: Bauplattform
- 20: Strahlungsquelle
- 22: Baufläche
- 24: Hochenergiestrahl
- 26: Ablenkeinrichtung
- 28: Messsystem
- 30: Bauteilschicht
- 32: Ausgleichseinrichtung
- 34: Focusfläche
- 36: F-Theta-Objektiv
- 40: Stellmittel

## Patentansprüche

1. Vorrichtung (10) zur generativen Herstellung eines Bauteils (12), umfassend mindestens einen Beschichter (14) zum Erzeugen einer Pulverschicht (16) auf einer Bauplattform (18), mindestens eine Strahlungsquelle (20), insbesondere einen Laser, zum Erzeugen eines Hochenergiestrahls (24), mittels welchem die Pulverschicht (16) in einer Baufläche (22) lokal zu einer Bauteilschicht (30) verschmelzbar und/oder versinterbar ist, mindestens eine Ablenkeinrichtung (26), mittels welcher der Hochenergiestrahl (24) auf unterschiedliche Bereiche der Pulverschicht (16) ablenkbar und auf die Baufläche (22) fokussierbar ist, mindestens ein Messsystem (28), mittels welchem eine Querschnittsgeometrie des Hochenergiestrahls (24) auf der Pulverschicht (16) und/oder der Bauteilschicht (30) ermittelbar ist, und mindestens eine Ausgleichseinrichtung (32), welche ausgebildet ist
- anhand der Querschnittsgeometrie des Hochenergiestrahls (24) eine Fokusfläche (34) des Hochenergiestrahls (24) zu ermitteln,
- zu prüfen, ob eine Abweichung zwischen der Baufläche (22) und der Fokusfläche (34) des Hochenergiestrahls (24) vorliegt, und
- die Baufläche (22) und die Fokusfläche (34) in Abhängigkeit der Prüfung zueinander auszurichten.

2. Vorrichtung (10) nach Anspruch 1,
**dadurch gekennzeichnet, dass**
die Ablenkeinrichtung (32) wenigstens eine optische Linse, insbesondere ein F-Theta Objektiv (36) umfasst, deren relative Lage gegenüber der Strahlungsquelle (20) in Abhängigkeit der Prüfung durch wenigstens ein zugeordnetes Stellmittel (40) einstellbar ist.

3. Vorrichtung (10) nach Anspruch 2,
**dadurch gekennzeichnet, dass**
der wenigstens einen optischen Linse eine Kinematik, insbesondere eine Parallelkinematik zugeordnet ist, mittels welcher die wenigstens eine optische Linse in mindestens drei translatorischen und/oder rotatorischen Freiheitsgraden bewegbar ist.

4. Vorrichtung (10) nach einem der Ansprüche 1 bis 3,
**dadurch gekennzeichnet, dass**
die Ausgleichseinrichtung (32) ausgebildet ist, in Abhängigkeit der Prüfung eine Ansteuerung der Strahlungsquelle (20) und/oder der Ablenkeinrichtung (26) anzupassen.

5. Vorrichtung (10) nach einem der Ansprüche 1 bis 4,
**dadurch gekennzeichnet, dass**
das Messsystem (28) in einen Strahlengang des Hochenergiestrahls (24) integriert ist und/oder ausgebildet ist, die Querschnittsgeometrie des Hochenergiestrahls (24) kollinear zum Hochenergiestrahl (24) zu ermitteln.

6. Vorrichtung (10) nach einem der Ansprüche 1 bis 5,
**dadurch gekennzeichnet, dass**
die Ausgleichseinrichtung (32) ausgebildet ist, in Abhängigkeit der Prüfung eine relative Lage der Bauplattform (18) zur Strahlungsquelle (20) einzustellen.

7. Vorrichtung (10) nach einem der Ansprüche 1 bis 6,
**dadurch gekennzeichnet, dass**
die Ausgleichseinrichtung (32) ausgebildet ist, die Fokusfläche (34) anhand eines Vergleichs zwischen wenigstens einer ermittelten Querschnittsgeometrie des Hochenergiestrahls (24) und wenigstens einer vorgegebenen Querschnittsgeometrie und/oder anhand der Querschnittsgeometrien des Hochenergiestrahls (24) in wenigstens drei nicht kollinearen Messpunkten und/oder anhand wenigstens einer minimalen Querschnittsgeometrie des Hochenergiestrahls (24) in einem Messpunkt zu ermitteln.

8. Vorrichtung (10) nach einem der Ansprüche 1 bis 7,
**dadurch gekennzeichnet, dass**
der Ausgleichseinrichtung (32) eine Messeinrichtung, insbesondere ein Glasmaßstab und/oder ein generativ mit dem Bauteil gefertigter Prüfstab, zugeordnet ist, mittels welcher ein Abstand zwischen der Strahlungsquelle (20) und der Pulverschicht (16) ermittelbar ist.

9. Verfahren zum Betreiben einer Vorrichtung (10) nach einem der Ansprüche 1 bis 8, umfassend zumindest die Schritte:
- Ermitteln wenigstens einer Querschnittsgeometrie des Hochenergiestrahls (24) auf der Pulverschicht (16) und/oder der Bauteilschicht (30) mittels des Messsystems (28),
- Ermitteln der Fokusfläche (34) des Hochenergiestrahls (24) anhand der wenigstens einen Querschnittsgeometrie des Hochenergiestrahls (24) mittels der Ausgleichseinrichtung (32),
- Prüfen mittels der Ausgleichseinrichtung (32), ob eine Abweichung zwischen der Baufläche (22) und einer Fokusfläche (34) des Hochenergiestrahls (24) vorliegt, und
- Ausrichten der Baufläche (22) und der Fokusfläche (34) zueinander in Abhängigkeit der Prüfung.

10. Verfahren nach Anspruch 9,
**dadurch gekennzeichnet, dass**
eine Leistung des Hochenergiestrahls (24) beim Ermitteln der Querschnittsgeometrie derart eingestellt wird, dass die Pulverschicht (16) im Messpunkt nicht verschmilzt und/oder versintert.

11. Verfahren nach Anspruch 9 oder 10,
**dadurch gekennzeichnet, dass**
die Fokusfläche (34) des Hochenergiestrahls (24) anhand der Querschnittsgeometrien des Hochenergiestrahls (24) in wenigstens drei nicht kollinearen Messpunkten ermittelt wird.

12. Verfahren nach einem der Ansprüche 9 bis 11,
**dadurch gekennzeichnet, dass**
die Bauplattform (18) zum Ermitteln einer minimalen Querschnittsgeometrie des Hochenergiestrahls (24) relativ zur Strahlungsquelle (20) bewegt wird.

13. Verfahren nach Anspruch 12,
**dadurch gekennzeichnet, dass**
die Bauplattform (18) zum Ermitteln der minimalen Querschnittsgeometrie kontinuierlich und/oder zumindest um die Rayleighlänge des Hochenergiestrahls (24) und/oder um mindestens 20 mm und/oder schrittweise um eine vorgegebene Strecke, insbesondere um 10 % der Rayleighlänge des Hochenergiestrahls (24) bewegt wird.

14. Verfahren nach einem der Ansprüche 9 bis 13,
**dadurch gekennzeichnet, dass**
zumindest das Prüfen, ob eine Abweichung zwischen der Baufläche (22) und der Fokusfläche des Hochenergiestrahls (24) vorliegt, kontinuierlich und/oder in vorgegebenen Zeitintervallen und/oder nach jeder hergestellten Bauteilschicht (30) und/oder vor einer vorbestimmten Bauteilschicht (30) und/oder in Abhängigkeit einer Erwärmung der Vorrichtung (10) durchgeführt wird.
